Europäisches Patentamt

European Patent Office

Office européen des brevets

(19)

(11) Veröffentlichungsnummer: **0 190 240**
**B1**

# (12) EUROPÄISCHE PATENTSCHRIFT

(45) Veröffentlichungstag der Patentschrift:
07.02.90

(21) Anmeldenummer: 85903832.5

(22) Anmeldetag: 26.07.85

(86) Internationale Anmeldenummer:
PCT/EP 85/00373

(87) Internationale Veröffentlichungsnummer:
WO 86/01053 (13.02.86 Gazette 86/04)

(51) Int. Cl. ⁵: **H 02 P 6/02**

(54) KOLLEKTORLOSER GLEICHSTROMMOTOR.

(30) Priorität: 27.07.84 US 635251

(43) Veröffentlichungstag der Anmeldung:
13.08.86 Patentblatt 86/33

(45) Bekanntmachung des Hinweises auf die Patenterteilung:
07.02.90 Patentblatt 90/06

(84) Bennante Vertragsstaaten:
DE FR IT NL

(56) Entgegenhaltungen:
DE-A-2 403 432
DE-A-3 044 056

(73) Patentinhaber: PAPST-MOTOREN GmbH & Co. KG
Karl-Maier-Strasse 1 Postfach 35
D-7742 St. Georgen/Schwarzwald 1 (DE)

(72) Erfinder: MÜLLER, Rolf
Johann-Georg-Schultheiss-Weg 3
D-7742 St. Georgen (DE)

(74) Vertreter: Strasse, Joachim, Dipl.-Ing.
Strasse und Stoffregen European Patent Attorneys
Zwelbrückenstrasse 17
D-8000 München 2 (DE)

LIBERGRAF, STOCKHOLM 1990

## Beschreibung

Die vorliegende Erfindung bezieht sich auf einen kollektorlosen Gleichstrommotor, mit einem rotorstellungsabhängigen Sensor. Üblicherweise dient als Sensor ein Hallelement, dessen Ausgänge über Wandel- und Verstärkungselemente aufeinanderfolgende elektromagnetische Antriebssträngе nacheinander unter Einhaltung von Umschaltpausen zum Umschalten von einem auf den anderen Strang mit Antriebspulsen versorgen.

Es ist bekannt kurzzeitige stromlose Pausen zwischen aufeinanderfolgende Statorstromimpulse einzufügen (EP-84 156). Um ein relativ weiches Schalten der nachgeschalteten Halbleiterstufen zu erreichen und um einen ruhigen, runden, Lauf des Motors zu erzielen, ist gemäß einer eigenen früheren, deutschen Patent-Anmeldung (P-3 426 780.8), in einer Schaltung mit einem digitalen Hall-IC ein RC-Glied nachgeschaltet, um ein abruptes Umschalten von einem Strang auf den anderen Strang zu vermeiden. In einer anderen früheren eigenen, deutschen Patent-Anmeldung (P-3 513 167.5) ist beschrieben, wie für diesen Zweck bei einer analogen Schaltung nach einem Hallglied ein oder mehrere Koppelkondensatoren eingefügt werden.

In Fortentwicklung dieser Schaltungen besteht die Aufgabe, ohne großen zusätzlichen Bauelementeaufwand eine gegebenenfalls zusätzliche Regelbarkeit des Gleichstrommotors dadurch verfügbar zu machen, daß die Schaltpausen zwischen den Pulsen einstellbar gemacht werden.

Weiterer hierzu relevanter Stand der Technik ergibt sich aus der DE-A-3 044 056 und der DE-A-2 403 432.

Auch aus der DE-A-3 044 056 ist ein zweipulsiger, kollektorloser Gleichstrommotor bekannt, bei dem zwischen aufeinanderfolgenden Strompulsen Stromlücken vorgesehen sind. Die Dauer der Stromlücken ist auch hier konstant.

In der DE-A-2 403 432 ist vorgesehen, die Kommutierungszeitpunkte eines solchen Gleichstrommotors verschiebbar im Bezug auf die Ausgangssignale der Drehstellungsdetektoren zu gestalten, um so bei sehr hohen Drehzahlen den Wirkungsgrad des Motors zu verbessern. Hierbei findet eine sinusförmige Ausgangsspannung der Drehstellungsdetektoren Verwendung und die Verschiebung erfolgt in zeitlich gleiche Richtung. Stromlücken sind nicht vorgesehen.

Auf diese Weise soll eine Regelbarkeit in Abhängigkeit von der Temperatur, vom Luftdruck oder von anderen physikalischen Größen möglich werden. Beispielsweise kann der Motor als Lüfter in einer Filteranordnung eingesetzt werden und es besteht die Aufgabe, den Lüftermotor in Abhängigkeit vom beizubehaltenden Unterdruck hinter der Filterschicht zu steuern und zwar auch dann, wenn eine Verstaubung der Filterschicht eine größere Lüfterleistung erforderlich macht. Andere Regelaufgabenstellungen ergeben sich aus den Erfordernissen, unter denen der Gleichstrommotor eingesetzt ist. Die Lösung besteht erfindungsgemäß darin, daß die Größe der Umschaltpausen zwischen den Antriebspulsen durch Anheben oder Absenken der Einschaltspannungsschwelle der Wandel- und/oder der Verstärkerelemente einstellbar ist.

Bei dieser Regelbarkeit bleibt die Höhe der Pulse unbeeinflußt, ihre Abstände werden aber variabel gestaltet. Diese Regelbarkeit läßt sich insbesondere dann mit Vorteil einsetzen, wenn die Flanken des Hallspannungsanstiegs und des Hallspannungsabfalls eine geeignete Neigung haben. Mit entsprechenden Bauelementen wird deshalb der Hallspannungsverlauf trapezförmig gehalten.

Als Umwandelelemente lassen sich vorteilhafterweise in einer zweisträngigen, zweipulsigen Auslegung Komparatoren verwenden, die paarweise an zwei gegenpolige Ausgänge einer Hallzelle angeschlossen sind. Die zwei Eingänge der Komparatoren werden mit wechselnden Hallspannungen beaufschlagt und aus der geregelten, gemeinsamen Betriebsspannungsversorgung für die Komparatoren und die Hallzelle wird mit einem regelbaren Spannungsteiler eine einstellbare Vorspannung gewonnen, die zusätzlich an zumindest jeweils einen Eingang der beiden Komparatoren zusätzlich angelegt werden. Beispielsweise können die beiden invertierenden (negativen) Eingänge der beiden Komparatoren eine über ein Widerstandspaar verteilte und über den Spannungsteiler gewonnene Vorspannung erhalten, die das Spannungsniveau vor den Komparatoren absenkt. Ebenso kann aber durch Anlegung der regelbaren Vorspannung an die nicht invertierenden (positiven) Eingänge das Eingangsspannungsniveau angehoben werden. In beiden Fällen ergibt sich eine mit wenigen Bauelementen realisierbare vorteilhafte Regelung der Abstände zwischen den aufeinanderfolgenden Pulsen, die an den Ausgängen der Komparatoren zur Verfügung stehen.

Selbstverständlich kann die entsprechende Schaltung auch so ausgelegt werden, daß die einstellbare Vorspannung zwischen einem positiven und einem negativen Wert variiert werden kann, wenn der variable Abgriff des Spannungsteilers entsprechend sowohl mit einem nicht invertierenden (positiven) als auch mit einem invertierenden (negativen) Eingang der paarweise eingesetzten Komparatoren verbunden wird. In jedem ergibt sich eine Schwellspannungsregelung der von den Ausgängen der Hallzelle gelieferten Spannung.

Der variable Abgriff des Spannungsteilers kann willkürlich von Hand einstellbar gemacht werden, es kann aber auch ein regelbarer Widerstand verwendet werden, der in Abhängigkeit von einer Regel spannungsgröße seinen Wert variiert, wobei die Regelspannungsgröße einen über andere Glieder gewonnenen physikalischen Wert wie Temperatur, Unterdruck usw. repräsentiert.

Die neue Schaltung kann mit den eingangs beschriebenen Koppelkondensatoren zum grundsätzlichen Offenhalten einer Mindestlücke zwischen den Antriebspulsen mit einer Schaltung zur Blockiersicherung kombiniert werden.

Ferner läßt sich die Schaltung mit den Spannungskonstantgliedern, einer Hallzelle, den Komparatoren und der vollständigen oder einer teilweisen Leistungsstufe zu einer integrierten Schaltung zusammenfassen, die den Vorteil hat, daß sie in klein auszuführenden Motoren leicht eingefügt werden kann, wobei zusätzlich der Vorteil nutzbar gemacht wird, daß bei der Motormontage ein integriertes Bauelement zu Verfügung steht, das nur über wenige Anschlüsse verfügt. Weitere Einzelheiten, Merkmale und Vorteile ergeben sich aus der folgenden Beschreibung der Zeichnung

Es zeigen:

Fig. 1 übereinander den Spannungsverlauf mit drei beispielshaft ausgewählten Zugriffsebenen und den daraus resultierenden unterschiedlichen Abständen zwischen den Einschaltzuständen eines Treibers,

Fig. 2 eine erste Ausführungsform zur Gewinnung der einstellbaren Abstände,

Fig. 3 eine erweiterte Ausführungsform dieser Schaltung,

Fig. 4 eine abgewandelte Schaltung und

Fig. 5 eine ausführliche Darstellung einer mit dem Hallglied integrierten Schaltung.

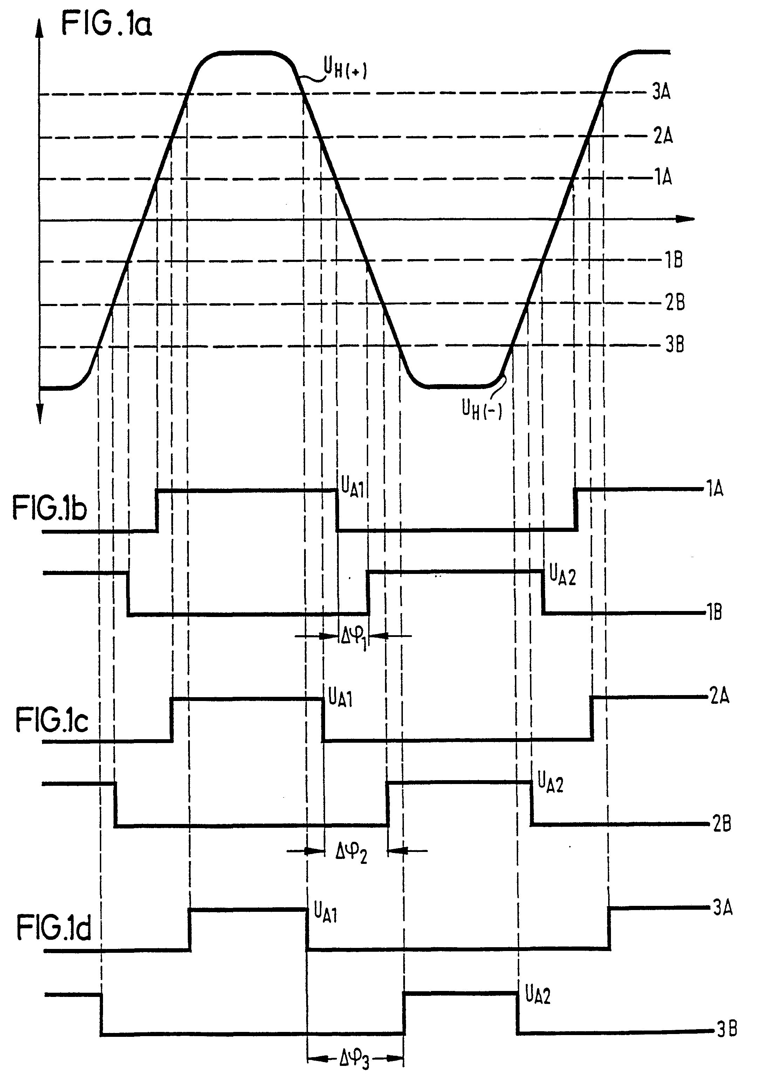

In Figur 1 ist das Prinzip der Gewinnung der Abstände Δp zwischen den an eine Statorspule anzulegenden Pulse elektrischer Energie $U_{A1}$, $U_{A2}$ dargestellt. Die Abstände Δp werden eingefügt, um bei der einfachsten Art eines zweipulsigen, zweisträngigen kollektorlosen Gleichstrommotors die Pulse derart auseinander zu halten, daß sich nicht die Ein-Schaltzustände der nachfolgenden Leistungstransistoren überlappen und damit in von den Leistungstransistoren gespeicherten Spulen nicht Felder erzeugt werden, die teilweise gegeneinander wirken würden. Wie vorstehend dargelegt ist es bekannt, Lücken zum weichen Schalten der Transistoren durch Kapazitäten oder durch RC-Glieder zu erzeugen.

Im verstärkten Maße werden diese Abstände für mehrpolige und mehrpulsige Gleichstrommotoren erforderlich, da je nach der Vielpoligkeit je Rotorumdrehung nicht nur zwischen zwei Polen, sondern zwischen einem Mehrfachen von zwei Polen je Rotorumdrehung gewechselt wird. Dennoch wird hier zur Vereinfachung der Darstellung die Situation für einen zweipoligen, zweipulsigen Motor erläutert. An einer Hallzelle fällt die Hallspannung UH mit einem etwaigen Verlauf gemäß Figur 1a an. Hierbei ist der etwa trapezförmige Verlauf der Hallspannung mit schrägen Flanken erkennbar. Soweit diese Charakteristik nicht unmittelbar aus einer Hallzelle gewinnbar ist, werden entsprechende Bauelemente in den Spannungsübertragungsweg eingefügt. Dieser Spannungsverlauf wird mittels Komparatoren 200 und 300 in eine Folge von Pulsen $U_{A1}$ und $U_{A2}$ umgewandelt, die direkt oder indirekt einer entsprechenden Statorspule zugeführt werden. Zwischen den Pulsen $U_{A1}$ und $U_{A2}$ Liegen Abstände $Δp_1$ bis

$Δp_3$ gemäß Figuren 1b bis 1d, die durch Wahl des Spannungsbereichs 1A - 1B, 2A - 2B und 3A - 3B vor den Komparatoren gemäß der Erfindung einstellbar sind.

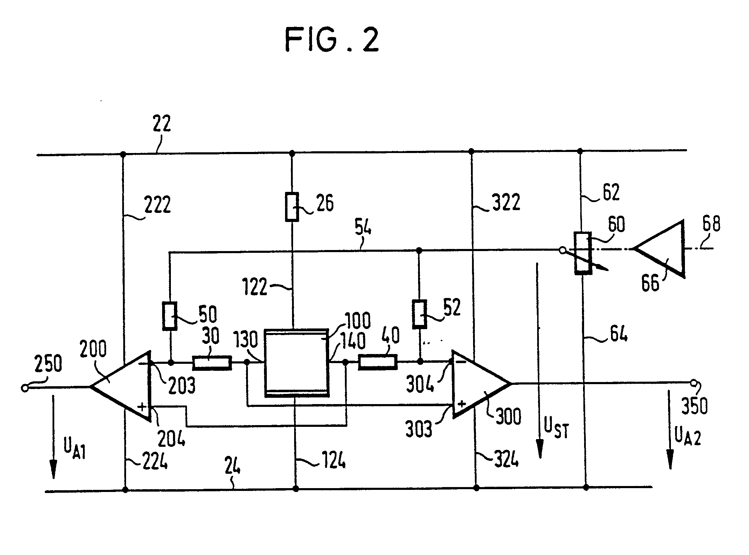

Die Figur 2 zeigt eine allgemeine Schaltung zur Erzeugung zweier aufeinanderfolgender Pulse $U_{A1}$ und $U_{A2}$ in Abhängigkeit von einem Rotorstellungsdetektor. Die Pulse $U_{A1}$ und $U_{A2}$ werden über eine in dieser Figur nicht dargestellten Endstufe verstärkt und jeweils einer Statorspule oder dem entsprechenden Wicklungsanteil einer Statorspule eines zweipulsigen kollektorlosen Gleichstrommotors zugeführt. Für jede Umdrehung des Motors erhält er zwei Pulse. Im Feld der Statorspule bewegt sich ein zweipoliger Rotor, der während einer Umdrehung zwei gleichlange und gleichstarke Antriebsmomente erhält, welche direkt aus den Pulsen $U_{A1}$ und $U_{A2}$ abgeleitet sind. Bei einer Mehrfachauslegung aller nachstehend abgehandelten Schaltungen können auch entsprechend mehrfach gepolte Rotoren angetrieben werden, wobei sich die Pulsigkeit entsprechend der Mehrfachauslegung erhöht.

Die jeweilige Stellung eines Rotors wird in den hier dargestellten Schaltungen von einer Hallzelle 100, einem Hall-IC, in einer Schaltung mit diskreten Bauelementen erfaßt. Diese Hallzelle 100 liegt zwischen einer geregelten Spannungsversorgung zwischen zwei Strängen 22 (-) und 24 (+), über eine Zuleitung 122 (-) und einem Widerstand 26 und eine Zuleitung 124 (+).

Zwischen Ausgängen 130 (links) und 140 (rechts) entsteht die Hall-Ausgangsspannung UH gemäß Kurvenzug in Fig. 1a. Hierbei liegt der eine Hallausgang 130 über einen Widerstand 30 am negativen Eingang 203 eines ersten Komparators 200 an. Dieser Komparator 200 erhält über seine Anschlüsse 222 und 224 die geregelte Spannung aus den Leitungen 22 und 24. Sein Ausgang 250 liefert einen Anteil $U_{A1}$ des Motor-Antriebpulses. Ein positiver Eingang 204 ist direkt mit dem zweiten Hallausgang 140 verbunden, wie auch der erste Hallausgang 130 direkt mit dem positiven Eingang 303 eines zweiten Komparators 300 verbunden ist. Der zweite Hallausgang 140 ist über einen Widerstand 40 mit dem negativen Eingang 304 des Komparators 300 verbunden, der über Anschlüsse 322 und 324 an der geregelten Versorgung 22, 24 der Schaltung liegt. Am Ausgang 350 des Komparators 300 steht ein Anteil $U_{A2}$ als Motor-Antriebspuls zur Verfügung, der ebenso wie der Ausgang 250 mit einer hier nicht dargestellten Endstufe die für die Statorspule erforderliche Spannung liefert.

Eine soweit beschriebene Schaltung ist bekannt und würde übergangslos oder nahe übergangslos die Treiberspule mit Spannung versorgen. Zur Ergänzung einer bestimmten Umschaltpause Δp gemäß Figur 1, in welcher alle nachgeschalteten Halbleiterstrecken von der einen Phasenlage beispielsweise der positiven Phasenlage UH (+) Hall-Ausgangsspannung UH, in die die andere Phasenlage, beispielsweise die negative Phasenlage UH (-), umschalten, wird diese bekannte Schaltung modifiziert. Diese angestrebte variable Differenz ist mit $\Delta p_{(1-3)}$ in den Figuren 1b bis Figur 1d dargestellt. Dementsprechend ergibt sich aus Figur 2 ist, daß der negative Eingang 203 des Komparators 200 mit einem Widerstand 50 und der negative Eingang 304 des Komparators 300 mit einem Widerstand 52 verbunden sind. Die freien Enden sind über eine Leitung 54 zusammengefaßt, welche zum variablen Abgriff eines regelbaren Spannungsteilers 60 führt, der über Leitungen 62 und 64 an die Leiterbahnen 22 und 24 angeschlossen ist. Mit der damit gewonnenen Steuerspannung $U_{St}$ lassen sich die Vorspannungen an den Eingängen 203 und 304 einstellbar absenken. Es wäre ebenso möglich, die Schwellen oder Vorspannungen an den positiven Eingängen 204 und 303 anzuheben, in dem der Spannungsteilerausgang über entsprechende Widerstände an diese Eingänge geführt wird.

Ferner ist es möglich, das in Figur 2 eingezeichnete Potentiometer 60 durch eine Einrichtung 66 zu ersetzen, um in Abhängigkeit von einer Regelspannung, die über eine Leitung 68 zugeführt wird, die Größe der Steuerspannung $U_{St}$ zu bestimmen.

In jedem Fall wird damit an den Ausgängen 250 und 350 der Anfang bzw. das Ende der aufeinanderfolgenden Pulse $U_{A1}$ und $U_{A2}$ über einen Einstellbereich $\Delta p_1$ bis $\Delta p_3$ (Figur 1) variiert, was eine Pulsbreitenregelbarkeit des mit dieser Schaltung betriebenen Gleichstrommotors ergibt. Die Treiberausgangsspannungen $U_{A1} \ldots U_{A2}$ stehen über unterschiedliche, einstellbare Zeiten oder Winkellagen zur Verfügung, was eine wirtschaftliche Regelung des Motors in Abhängigkeit von äußeren Parametern, wie Betriebstemperatur, Last, Drehzahl, Luftmenge bei einem mit dem Motor integrierten Lüfter usw. ermöglicht.

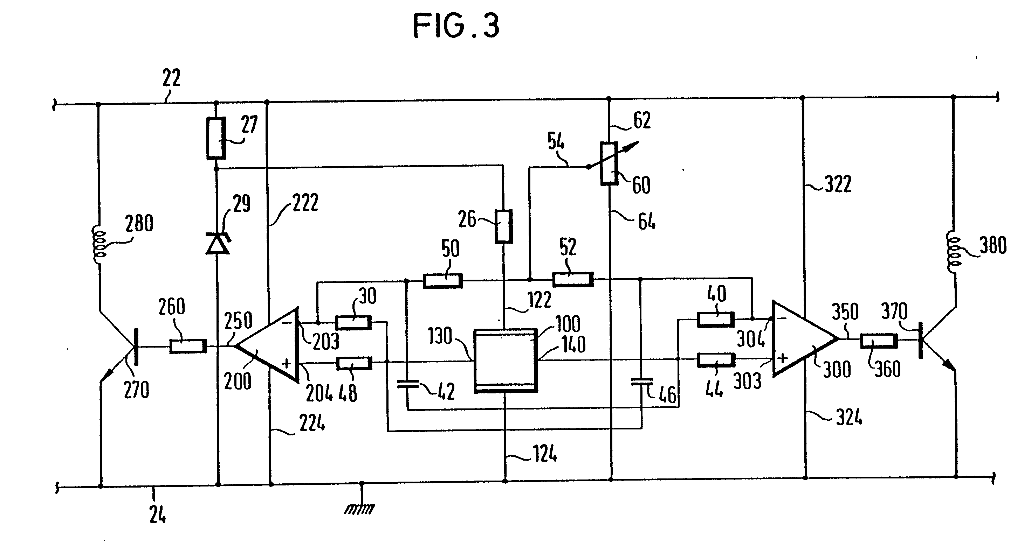

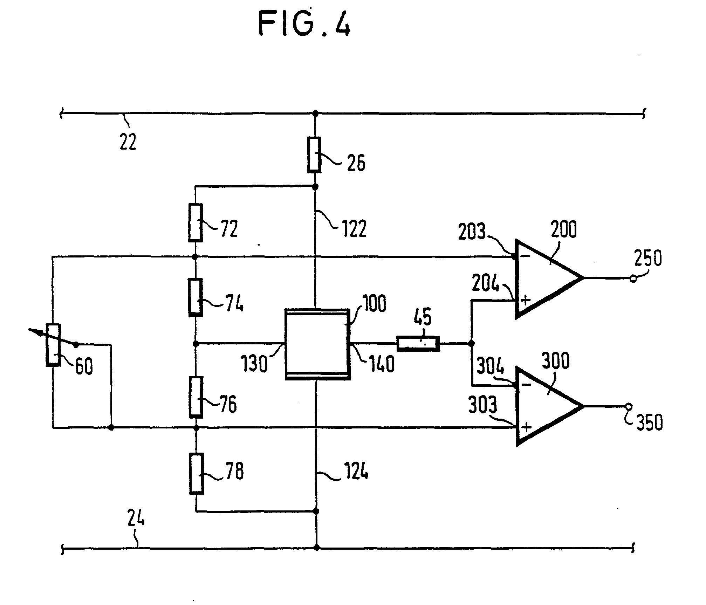

In Figur 3 und 4 sind jeweils abgewandelte Schaltungen dargestellt. Die Figur 3 zeigt wie die Schaltung bis zur Statorspule erweitert ist und eine Kombination mit Koppelkondensatoren.

Alle anhand der Figur 2 beschriebenen Bauelemente sind mit den selben Bezugszahlen belegt und insoweit gilt die selbe Beschreibung. Zur Versorgung der Hallzelle 100 sind in die Zuleitung 122 zusätzlich zum Widerstand 26 als Spannungskonstantglieder ein Widerstand 27 mit Zenerdiode 29 eingefügt. Der Ausgang 140 liegt über einen Koppelkondensator 42 am Eingang 203 an, während die Zuleitung zum Eingang 303 über einen Widerstand 44 erfolgt. Ebenso liegt der Ausgang 130 über einen Koppelkondensator 46 am Eingang 304 an, während die Zuleitung zum Eingang 204 über einen Widerstand 48 erfolgt. Mit dieser Koppelkondensatorschaltung wird bei mäßig großen Kapazitätswerten und ohne großen Schaltungsaufwand eine für einen sicheren Motoranlauf ausreichend lange Einschaltdauer ermöglicht. Zugleich wird im Blockierzustand ein rasches und definiertes Abschalten der Endstufentransistoren gewährleistet. Somit werden evtl. Mängel aus zu groß werdenden Schaltpausen $\Delta p$ wieder kompensiert.

In der Schaltung der Figur 3 sind hinter den Ausgängen 250 und 350 als Beispiel Leistungstransistoren eingezeichnet. Am Ausgang 250 liegt über einen Widerstand 250 ein Endstufentransistor 270, der eine Statorspule 280 speist, welche eine Hälfte des elektromagnetischen Antriebsfeldes für eine Umdrehung erzeugt. Diese Spule 280 kann direkt weitergewickelt sein, um über die Verbindung 22 als Mittelanzapfung eine Spule 380 zu bilden. Die Spule 380 kann je nach Motorkonstruktion auch eine gesonderte Spule zur Erzeugung der anderen Feldhälfte je Umdrehung sein, die über einen Endstufentransistor 370 und einen Widerstand 360 am Ausgang 350 anliegt.

Die Figur 4 zeigt, daß sich die Schaltung mit einem minimalen Aufwand an Bauelementen verwirklichen läßt, wobei diese Darstellung nur als Prinzipschaltung zu verstehen ist. Wiederum sind bereits beschriebene Bauelemente mit den oben erläuterten Bezugszahlen versehen. Das vom Ausgang 140 abgegriffene Potential liegt über einen Widerstand 45 an dem positiven Eingang 204 und an dem negativen Eingang 304 der Komparatoren 200 bzw. 300 an. Der Ausgang 130 liegt in der Mitte einer Widerstandskette zu der parallel der regelbare Widerstand 60 liegt. Über die Widerstände 74 und 76 teilt sich der Ausgang 130 an die Eingänge 203 bzw. 303. Die Widerstände 72 und 78 sorgen für das Vorspannungsniveau an diesen Eingängen, welches sich durch den regelbaren Widerstand 60 im Sinne der Figuren 1b bis 1d absenken aber gemäß diesem Beispiel auch zugleich erhöhen läßt. Es kann deshalb als Beispiel für eine Erzeugung eines zwischen (+) und (-) variierbaren Vorspannungsbereichs gelten.

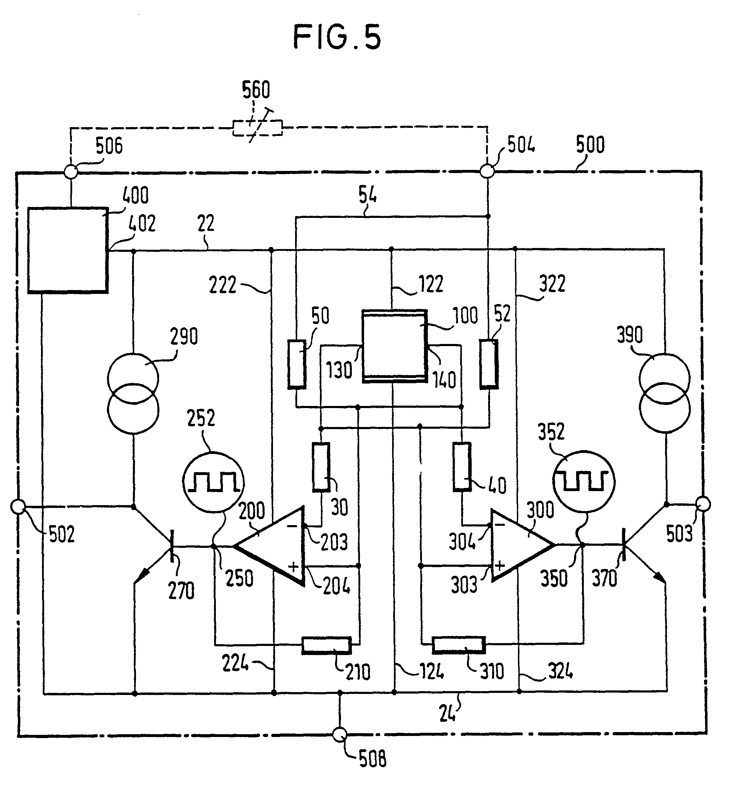

In Figur 5 ist eine mit einer Hallzelle 100 integrierte Schaltung 500 für einen in seinen weiteren Einzelheiten nicht dargestellten zweisträngigen Motor dargestellt. Die Vorteile einer mit der Hallzelle 100 völlig integrierten Schaltung 500 als ein Baustein liegen für klein bauende Motoren auf der Hand. Obwohl Leistungen und Antriebsspannungen über einen weiten Bereich variiert werden können, läßt sich die in Figur 5 dargestellte Schaltung beispielsweise für eine Leistung von 4 Watt bei einer Betriebsspannung zwischen 2 und 30 Volt auslegen.

Die integrierte Schaltung hat nur fünf Schnittstellen 502, 503, 504, 506, 508, die nachstehend erläutert, teils der Versorgung des Bausteines 500, teils der Miterleitung der in dem Baustein ausgeformten Treiberspannungen und teilweise dem Anschluß einer außen liegenden Regelung dienen.

Im Baustein 500 befindet sich die Hallzelle 100, deren Versorgung über die Anschlüsse 122 und 124 in der oben beschriebenen Weise mit nachstehend erläuterten Abwandlungen erfolgt. Zwischen den zwei Ausgangen 130 und 140 fällt die Hallspannung $U_H$ (vgl. Fig. 1) an. Der linke Ausgang 130 ist einerseits über einen Widerstand 30 mit dem negativen, oberen Eingang 203 des Komparators 200 und andererseits direkt mit dem positiven Eingang 303 des Komparators 300 verbunden. Der zweite Ausgang 140 ist unter Wahrung einer Symmetrie seinerseits über einen Widerstand 40 an den negativen Eingang 304 des zweiten Komparators 300 und direkt an den positiven Eingang 204 des Komparators 200 angeschlossen.

Der positive Eingang 204 des Komparators 200 ist zusätzlich über einen Mitkoppelwiderstand 210 mit dem Ausgang 250 des Komparators 200 und der positive Eingang 303 des Komparators 300 ist über einen Mitkoppelwiderstand 310 mit dem Ausgang 350 des Komparators 300 verbunden.

Vor den Ausgängen 502 und 503 des Bausteins 500 liegen npn-Treibertransistoren 270 und 370. Die Basis des Treibertransistors 270 ist mit dem Ausgang 250 und die Basis des Treibertransistors 370 mit dem Ausgang 350 verbunden. Die beiden Emitter liegen auf der Schiene 24, welche über die Schnittstelle 508 mit Spannung versorgt wird. Die Kollektoren der Transistoren 270 und 370 liegen direkt an den Ausgängen 502 und 503 an, welche die Pulse $U_{A1}$ bzw. $U_{A2}$ zur Verfügung stellen. Ferner sind die Kollektoren der beiden Transistoren 270 und 370 über je ein integriertes Konstantstromglied 290 bzw. 390 mit der Leitung 22 verbunden.

Im Baustein 500 befindet sich noch zwischen den Leitungen der Leitung 24 und der Schnittstelle 506 ein integrierter Spannungsregler 400, der über einen geregelten Ausgang 402 die Leitung 22 mit einer Spannung von beispielsweise 3...5 Volt versorgt.

Am Ausgang 250 stehen die Pulse $U_{A1}$ in den Größen 1A (Fig. 1b), 2A (Fig. 1b) und 3A (fig. 1c) an, was durch Darstellung 252 verdeutlicht ist. Die gleichen Pulse stehen verstärkt an der Schnittstelle 502 bereit. Die ergänzenden, phasenversetzten Pulse $U_{A2}$ werden in den Größen 1B (Fig. 1b), 2B (Fig. 1C) und 3B (Fig. 1d) durch die Darstellung 352 am Punkt 350 repräsentiert.

Gemäß der Erfindung sind dieser integrierten Schaltung 500 die Widerstände 50 und 52 hinzufügt. Beide Widerstände 50 und 52 greifen einerseits je an den positiven Eingängen 204 bzw. 303 der Komparatoren 200 bzw. 300 an und werden andererseits über die Leitung 54 zusammengefügt zu einem weiteren Schnittstellenpol 504 weitergeleitet, um nur einen Ausgang 504 nach außen außerhalb des Blocks 500 zu bilden. Als Gegenpol für diesen Ausgang 504 dient ein Potentialzuleitungspol 506, an dem die Spannungsregelschaltung 400 liegt. Zwischen diesen beiden Polen 506 liegt außer der regelbare Widerstand 560. Mit diesem regelbaren Widerstand 560 können von außen her die an den positiven Eingängen 204 bzw. 303 der Komparatoren 200 bzw. 300 anliegenden Bezugsspannungen mit den beschriebenen Wirkungen und Vorteilen geregelt werden. Diese Regelung des Pulsabstandes $\Delta p$ kann jeder anderen Regelung überlagert werden. Beispielweise kann eine ebenfalls von außen Pulserhöhungsschaltung gemäß Figuren 6 und 7 der Europäischen Publikation 84 156 (EP 82 111 882.5) überlagert werden.

## Patentansprüche

1. Kollektorloser Gleichstrommotor mit einem rotorstellungsabhängigen Sensor (100), beispielsweise einem Hallelement, dessen Ausgänge zumindest zweipolig über Wandel- und Verstärkungselemente (200, 300, 270, 370) aufeinanderfolgende elektromagnetische Antriebsstränge (280, 380) nacheinander unter Einhaltung von Umschaltung ($\Delta p_1$, $\Delta p_2$, $\Delta p_3$) von einem zum folgenden Strang mit Antriebspulsen ($U_{A1}$, $U_{A2}$) versorgen, *dadurch gekennzeichnet* daß die Ausgangsspannung des Sensors (100) schräg ansteigende und abfallende Flanken aufweist und daß die zur Kommutierung dienenden Verstärkerelemente (270, 370) von Komparatoren (200, 300) gesteuert sind deren Eingänge mit der Ausgangsspannung des Sensors (100) und einer die Größe ($\Delta p$) der Umschaltpausen vorgebenden einstellbaren Referenzspannung beaufschlagt sind.

2. Motor nach Anspruch 1, *dadurch gekennzeichnet* daß als Umwandelelemente in einer zweisträngigen, zweipulsigen Auslegung an zwei gegenpolige Ausgänge (130, 140) einer Hallzelle (100) paarweise je ein Komparator (200, 300) angeschlossen ist, deren zwei Eingänge (203, 204 bzw. 304, 303) mit der wechselnden Hallspannung ($U_{H(+)}$, $U_{H(-)}$) beaufschlagt sind und die Komparatoren (200, 300) zwischen einer Spannungsversorgung (22, 24) liegen, aus der über einen regelbaren Spannungsteiler (60) die Einschaltspannungsschwellen der Komparatoren (200, 300) einstellbar sind.

3. Motor nach Ansprüche 1 und 2, *dadurch gekennzeichnet* daß der variable Abgriff (54) des Spannungsteilers (60) über je einen Widerstand (50, 52) jeweils am negativen Eingang (203 bzw. 304) der Komparatoren (200 bzw. 300) anliegt.

4. Motor nach Anspruch 1 und 2, *dadurch gekennzeichnet* daß der variable Abgriff (54) des Spannungsteilers (60) über je einen Widerstand (50, 52) jeweils am positiven Eingang (204 bzw. 303) der Komparatoren (200 bzw. 300) anliegt.

5. Motor nach Ansprüchen 1 und 2, *dadurch gekennzeichnet*, daß der variable Abgriff des Spannungsteilers sowohl am positiven als auch am negativen Eingang (203 bzw. 304 - Fig. 4) der Komparatoren (200, 300) anliegt.

6. Motor nach Anspruch 1, *dadurch gekennzeichnet* daß die wechselnde Hallspannung ($U_H$) einen trapezförmigen Verlauf mit schrägen Spannungsanstiegs- und -abfallflanken hat.

7. Motor nach einem oder mehreren der Ansprüche 1 bis 6, *dadurch gekennzeichnet* daß der Spannungsteiler (60) in Abhängigkeit von einer Steuerspannung (64, 66) regelbar ist.

8. Motor nach einem oder mehreren der vorausgehenden Ansprüchen 1 bis 7, *dadurch gekenn-*

zeichnet, daß zur Blockiersicherung die beiden Sensorsausgänge (130, 140) über je einen Koppelkondensator (42, 46) jeweils am negativen Eingang eines Komparators (200, 300) anliegen.

9. Motor nach einem oder mehreren der vorausgehenden Ansprüche 1 bis 8, *dadurch gekennzeichnet* daß für eine zweipulsige, zweisträngige Auslegung die Hallzelle (100) und die Komparatoren (200, 300) zu einer fünfpoligen integrierten Schaltung zusammengefaßt sind, wobei außer einer zweipoligen Stromversorgung (506, 508) und je einem zur Ansteuerung eines Stranges herausgeführten Pol (502 und 503) nur ein Pol (504) als Anschluß für ein Regelglied (560) vorgesehen ist, dessen zweiter Anschluß an einen Pol (506 oder 508) der Stromversorgung angelegt ist.

## Claims

1. A collector-free direct current motor having a sensor (100) dependent on rotor setting, for example a Hall generator, whose outputs supply at least double-pole drive pulses ($U_{A1}$, $U_{A2}$) via transforming and amplifying elements (200, 300, 270, 370) to consecutive electromagnetic drive lines (280, 380) while adhering to switch intervals ($\Delta p_1$, $\Delta p_2$, $\Delta p_3$) from one line to the next, *characterized in that*, the output voltage of the sensor (100) shows inclined ascending and falling flanks and that the amplifying elements (270, 370) which promote commutation are controlled by comparators (200, 300) whose input points admit the output voltage of the sensor (100) and an adjustable reference voltage having the presupposed size ($\Delta p$) of the switch intervals.

2. A motor according to Claim 1, *characterized in that*, as transformer elements in a double-line, double-pulse arrangement on two antipole outputs (130, 140) of a Hall cell (100), comparators (200, 300) are connected in pairs, whose two input points (203, 204 or 304, 303) are loaded with the changing Hall voltage ($U_{H(+)}$, $U_{H(-)}$) and the comparators (200, 300) lie between a voltage supply (22, 24) from which the switching-on voltage thresholds of the comparators (200, 300) are adjustable by means of a controllable potentiometer (60).

3. A motor according to Claims 1 and 2, *characterized in that*, the variable pick-up (54) of the potentiometer (60) is applied to the respective negative entry points (203 or 304) of the comparators via a resistor (50, 52) each.

4. A motor according to Claims 1 and 2, *characterized in that*, the variable pick-up (54) of the potentiometer (60) is applied to the respective positive entry points (204 or 303) of the comparators via resistor (50, 52) each.

5. A motor according to Claims 1 and 2, *characterized in that*, that the variable pick-up of the potentiometer is applied to the positive as well as the negative entry points (203 or 304 - Fig. 4) of the comparators (200, 300).

6. A motor according to Claim 1, *characterized in that*, that the changing Hall voltage ($U_H$) has a keystone course with sloping ascending and falling voltage flanks.

7. A motor according to one or more of Claims 1 to 6, *characterized in that*, that the potentiometer (60) is contrallable by means of a control voltage (68, 66).

8. A motor according to one or more of the preceding Claims 1 to 7, *characterized in that*, as a blocking safety mechanism, both sensor outputs (130, 140) are applied to the respective negative entry points of a comparator (200, 300) via a coupling capacitor each (42, 46).

9. A motor according to one or more of the preceding Claims 1 to 8, *characterized in that*, for a double-pulse, double-line arrangement the Hall cell (100) and the comparators (200, 300) are combined in a five-pole integrated circuit, whereby - apart from a double-pole current supply (506, 508) and each pole (502 and 503) used for controlling a line - only one pole (504) is provided as a connecting means for a regulating member (560), whose second connecting means is applied to a pole (506 or 508) of the current supply.

## Revendications

1. Moteur à courant continu, sans collecteur, avec un capteur (100) sensible à la position du rotor, par exemple un élément à effet Hall, dont les sorties alimentent successivement, au moins de manière bipolaire, et par l'intermédiaire d'éléments de conversion et d'amplification (200, 300, 270, 370), des enroulements d'entraînement électromagnétiques successifs (280, 380), avec des impulsions d'entraînement ($U_{A1}$, $U_{A2}$) en respectant des intervalles de commutation ($\Delta p_1$, $\Delta p_2$, $\Delta p_3$) lors du passage d'un enroulement à l'autre, caractérisé en ce que la tension de sortie du capteur (100) présente des flancs montants et descendants inclinés, et en ce que les éléments d'amplification (270, 370) servant à la commutation, sont pilotés par des comparateurs (200, 300), dont les entrées sont sollicitées par la tension de sortie du capteur (100) et une tension de référence réglable qui détermine la grandeur ($\Delta p$) des intervalles de commutation.

2. Moteur selon la revendication 1, caractérisé en ce que en guise d'éléments de conversion, dans une éxécution bi-impulsionnelle et à deux enroulements, des comparateurs (200, 300) sont raccordés par paire, chacun à deux sorties de polarité opposée (130, 140) d'une cellule de Hall (100), les deux entrées (203, 204 et 304, 303) de chacun des comparateurs (200, 300) étant soumises à la tension alternative de Hall ($U_{H(+)}$, $U_{H(-)}$), tandis que les comparateurs (200, 300) sont agencés entre une alimentation en tension (22, 24) à partir de laquelle les seuils de déclenchement des comparateurs (200, 300) sont réglables, au moyen d'un diviseur de tension réglable (60).

3. Moteur selon les revendications 1 et 2, caractérisé en ce que le piquage variable (54) du diviseur de tension (60) est appliqué, par l'intermédiaire d'une résistance correspondante (50, 52) à chacune des entrées négatives (203, 304) de chacun des comparateurs (200, 300).

4. Moteur selon les revendications 1 et 2, caractérisé en ce que le piquage variable (54) du diviseur de tension (60) est appliqué, par l'intermédiaire d'une résistance correspondante (50, 52) à chacune des entrées positives (204, 303) de chacun des comparateurs (200, 300).

5. Moteur selon les revendications 1 et 2, caractérisé en ce que le piquage variable du diviseur de tension, est aussi bien appliqué sur l'entrée positive que sur l'entrée négative (203, 304 - fig. 4) des comparateurs (200, 300).

6. Moteur selon la revendication 1, caractérisé en ce que la tension alternative de Hall ($U_H$) présente une allure trapézoïdale avec des flancs de montée et de chute de tension, inclinés.

7. Moteur selon l'une ou plusieurs des revendications 1 à 6, caractérisé en ce que le diviseur de tension (60) est réglable en fonction d'une tension de commande (68, 66).

8. Moteur selon l'une ou plusieurs des revendications précédentes 1 à 7, caractérisé en ce que pour la sécurité de blocage, les deux sorties de capteur (130, 140) sont chacune raccordée à une entrée négative d'un comparateur (200, 300), par l'intermédiaire d'un condensateur de couplage (42, 46).

9. Moteur selon l'une ou plusieurs des revendications précédentes 1 à 8, caractérisé en ce que pour une éxécution bi-impulsionnelle et à deux enroulements, la cellule de Hall (100) et les comparateurs (200, 300) sont rassemblés en un circuit intégré à cinq bornes, dans lequel n'est prévue, exceptés une alimentation en courant bipolaire (506, 508) et deux bornes de sortie (502 et 503) destinées chacune à la commande d'un enroulement, qu'une seule borne polaire (504) en tant que borne de connexion pour un organe de réglage (560), dont la deuxième borne de connexion est appliquée sur une borne polaire (506 ou 508) de l'alimentation en courant.

FIG.1a

$U_{H(+)}$

3A

2A

1A

1B

2B

3B

$U_{H(-)}$

FIG.1b

$U_{A1}$

1A

$U_{A2}$

1B

$\Delta\varphi_1$

FIG.1c

$U_{A1}$

2A

$U_{A2}$

2B

$\Delta\varphi_2$

FIG.1d

$U_{A1}$

3A

$U_{A2}$

3B

$\Delta\varphi_3$

# FIG . 2

# FIG.3

EP 0 190 240 B1

# FIG.4

# FIG.5